# EUROPEAN PATENT APPLICATION

(11) **EP 0 839 817 A2**
(43) Date of publication of application: **06.05.1998**
(21) Application number: 97117853.8
(22) Date of filing: 15.10.1997
(51) Int. Cl.: C07F 9/50, C07F 9/72

(54) **Method for purifying mono-alkyl-arsines or mono-alkyl-phosphines**

(30) Priority: 31.10.1996 JP 290491/96
(71) Applicant: FURUKAWA CO., LTD., Tokyo 100 (JP)
(72) Inventor: Murakoshi, Masao, c/o Furukawa Co., Ltd., Hino-shi, Tokyo (JP); Matsueda, Toshiharu, c/o Furukawa Co., Ltd., Hino-shi, Tokyo (JP)
(74) Representative: Sparing - Röhl - Henseler Patentanwälte

(57) **Abstract**

The purification method of mono-alkyl-arsine and mono-alkyl-phosphine, especially mono-tertiary-butyl-arsine and mono-tertiary-butyl-phosphine, which is characterized to remove organic compound impurities by immersing a zeolite adsorbent.

## Description

The present invention relates to a method for preparing highly pure mono-alkyl-arsine and mono-alkyl-phosphine. The highly pure mono-alkyl-arsine and mono-alkyl-phosphine are useful as materials for use in the epitaxial growth of compound semiconductors. Group 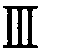 - 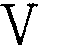 compound semiconductors have widely been used in various devices such as light emitting diodes (LED), semiconductor lasers (LD) and high electron mobility transistors (HEMT).

As several methods for preparing a compound semiconductor, there have been known epitaxial crystal growth techniques such as Liquid Phase Epitaxy (LPE), Molecular Beam Epitaxy (MBE) and Metal Organic Chemical Vapor Deposition (MOCVD). In these techniques, MOCVD has widely been used as a productive method.

In the epitaxial growth of 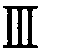 - 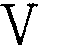 compound semiconductor by MOCVD, there have been used metal organic compounds, which are storaged in the stainless steel bubblers, as a source for group 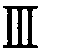 elements and used metal organic compounds or hydride gases, which are contained in the high pressure vessels, as a source for group 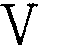 elements. However, hydride gases, particularly, arsine and phosphine gases are highly toxic and suffer from a problem of safety. Recently, there has been proposed the use of mono-tertiary-butyl-arsine or mono-tertiary-butyl-phosphine as a source of group 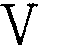 element, and they have attracted special interest as a substitute for phosphine or arsine, since the use thereof enables as same formation of epitaxial growth films as the use of hydride gases and they are less toxic.

As a method for preparing mono-alkyl-arsine and mono-alkyl-phosphime, the following have been known; (see for instance, Rec. Trav. Chim. 82, (1982) P202)
a. Mono-alkyl-halide reacts with magnesium in an organic solvent in order to synthesize a Grignard Reagent,
b. This Grignard Reagent reacts with arsenic-trihalide or phosphorus-trihalide at the molecular ratio of one to one in an organic solvent, then these are converted into mono-alkyl-arsine-dihalide or mono-alkyl-phosphine-dihalide,
c. Then magnesium halide, which is by-product, is removed from this slurry by filtration and then the mono-alkyl-arsine-dihalide or mono-alkyl-phosphine-dihalide is recovered.

In the case of this mono-alkyl-arsine-dihalide or mono-alkyl-phosphine-dihalideis solid at room temperature, dissolving it in an adequate organic solvent then this mono-alkyl-arsine-dihalide or mono-alkyl-phosphine-dihalide is converted into the mono-alkyl-arsine or mono-alkyl-phosphine by reaction with the reductant such as Lithyum Alminum Hydride.

Then mono-alkyl-arsine or mono-alkyl-phosphine is refined by distillation.

When mono-alkyl-arsine or mono-alkyl-phosphine is produced by such a series of methods, mono-alkyl-halide or arsenic trihalide or phosphorus trihalide, which is the raw material, contains trace of inorganic and organic impurities. Moreover these raw materials, organic solvents and alkylated arsine or phosphine-dihalide derivatives themselves have been become impurities.

Even though extremely small amount of these impurities mixed in the product, the compound semiconductor formed from epitaxial growth of this mono-alkyl-arsine or mono-alkyl-phosphine does not exhibit the purposive electrical and optical properties at all.

For the sake of purification, the following measures are considered;
(a) to use high purity raw materials and solvents,
(b) to decrease raw materials and derivative not reacting,
(c) to select easily separable solvents by distillation and so on.

However, these measures have the following drawbacks;
(a) high purity materials are highly expensive, so to use high purity materials increases a cost,
(b) with regard to normal organic synthesis, the yield has upper bounds about 95 % and achievement of higher yield needs precise control of reaction conditions. This measure also increases a cost.
(c) to purify mono-alkyl-arsine or phosphine by distillation results in lowering the yield, and removing the impurities by distillation is quite difficult and complicated.

The present invention has been completed for elimination of the foregoing drawbacks associated with the production of mono-alkyl-arsine or mono-alkyl-phosphine, and accordingly an object of the present invention is to provide the purification method of mono-alkyl-arsine or mono-alkyl-phosphine, whose method make possible to purify mono-alkyl-arsine or mono-alkyl-phosphine by the simple operation with partial curtailment of complicated distillation process.

The inventors have conducted a lot of studies and researches on the basis of the foregoing facts and, as a result, have found out the method for purifying mono-alkyl-arsine or mono-alkyl-phosphine, which is not able to realize by distillation technology.

The method for purifying mono-alkyl-arsine or mono-alkyl-phosphine according to the present invention comprising the steps of
a. reacting Grignard Reagent and arsenic-trihalide or phosphorus-trihalide in an organic solvent to synthesize mono-alkyl-arsine dihalide or mono-alkyl-phosphine-dihalide, then a magnesium halide as by-product is removed,
b. reacting this mono-alkyl-arsine-dihalide or mono-alkyl-phosphine-dihalide and reductant which is dispersed in an organic solvent to synthesize mono-alkyl-arsine or mono-alkyl-phosphine,
c. removing impurities which have high boiling point by distillation to purify this mono-alkyl-arsine or mono-alkyl-phosphine, then immersing a zeolite adsorbent in this mono-alkyl-arsine or mono-alkyl-phosphine to remove all other impurities,
d. recovering mono-alkyl-arsine or mono-alkyl-phosphine.

Mono-alkyl-halide reacts with magnesium to produce the Grignard Reagent. This Grignard Reagent reacts with arsenic trihalide or phosphorus trihalide in an organic solvent on the condition that the molecular ratio is one to one. In consequence, these are converted into mono-alkyl-arsine-dihalide or mono-alkyl-phosphine-dihalide, and the magnesium halide, which is by-product, is separated from this mixture by filteration, and the recovered mono-alkyl-arsine-dihalide or mono-alkyl-phosphine-dihalide is reduced to mono-alkyl-arsine or mono-alkyl- phosphine by the reaction with reducing agent such as Lithium Aluminum Hydride dispersed in an organic solvent. In the distillation process, the volatile component, which is mainly mono-alkyl-arsine or mono-alkyl-phosphine, is distilled out, and finally the other components, which have higher boiling point than mono-alkyl-arsine or mono-alkyl-phosphine, such as mainly those derivatives, organic solvent and inorganic materials such as metal halide are remained in the residue. And at this distillation process, at first the organic solvents which have lower boiling point than the purposive product is distilled out.

The only distilled product like this has more or less organic impurities. When it has less organic impurities, it is easier to purifiy the intermediate product by immersing an adsorbent. However, the degree of distillation to remove the organic impurities which have lower boiling point is not enough to be more than the requirement. Because it is possible that the zeolite adsorbent adsorbs organic impurities, and also this adsorbent is possible to separate from mono-alkyl-arsine or mono-alkyl-phosphine.

Moreover, excessively removing the impurities which have lower boiling point bydistillation, inevitably leads to decrease on the yield of the product. For that reason, the degree of purification by distillation must be determined to take the purity and yield of the product into account.

In general, the distillation process would be performed as follows, the first of distillation is to boil out the low boiling point component, the second is to boil off the purposive product, and the final is to remain the high boiling point in the residue. The changeover from the first process to the second one carries out at the bending point of the concentration curve of the impurity which boiling point is near the purposive product. When the changeover is earlier than this vicinity, the concentration of the impurities is higher in the purposive product and also it leads to difficulty of the next purification process. The other hand, when the changeover is later than this vicinity, it leads to decrease on the yield. And also, it is preferred that the changeover from second process to the third one carries out at the time when the temperature of the residue in the distiller comes up to one or two centigrade degree higher than the boiling point of the purposive product. Because when the changeover is earlier than this range, it leads to decrease on the yield and on the contrary when the changeover is later than this range, it leads to high impurity content in the purposive product, and also leads to difficulty of the next purification process.

By the operation above mentioned of distillation process, the concentration of all impurities in the product is possible to be decreased under hundreds ppm. Even if the concentration of the impurities in the product would have decreased as less as possible by distillation, the product has not yet permitted to be used in compound semiconductor field. Because the purity of the product is not sufficient for the required properties of compound semiconductor.

For that reason, the mono-alkyl-arsine or mono-alkyl-phosphine distilled in this process needs to adsorb and eliminate the impurity by zeolite adsorbent for the purification. There is also able to purify the product just only by process of adsorption and elimination, without by process of distillation. It depends on the concentration of impurities which process is appropriate. When the concentration of impurities is low, the adsorption and elimination process is suitable to save the production cost.

The adsorbent which is used in this invention is required to be not formed the particles and metals by its breakage, exfoliation and dissolution, and it is also required to hardly desorb the impurities in this system. There are some adsorbents, for example, activated clay, activated alumina, silica gel, activated carbon and zeolite. However, only zeolite is accepted all the requirements above mentioned. Moreover, zeolite is able to adsorb low amount of impurities, and adsorption capacity is not seriously influenced by surroundings temperature, and zeolite is able to adsorb polar compounds and unsaturated compounds preferentially.

As the zeolite, there have been known over one hundred natural and synthetic types altogether. The natural zeolites do not have ability of adsorbing impurities selectively, because of the wide pore diameter distribution. On the contrary, its distributions of synthetic ones are uniform and its diameter can be adjustable, so they adsorb the impurities selectively. For these reasons, synthetic zeolite is prefer to natural one in this invention.

As the synthetic zeolite, the types of 3A, 4A, 5A, 10X and 13X are representative. The 3A type is able to adsorb only water and its adsorption velocity is slow, so the types of 3A is not adaptable. The other types, 4A, 5A, 10X and 13X are able to use in this invention. Especially, the 13X type is the most preferable, because it has fast adsorption velocity and it is able to adsorb many substances in comparison with the others.

The quantity of the zeolite to be used is variable depending on the period of adsorption and the amount and types of impurities to be removed. When the quantity of adding zeolite is increased, the time of immersing adsorbent is able to shorten, however the product's yield of recovery is fallen off.

When the time of immersing adsorbent has been decided for one week, the adding zeolite's quantity is suitable from 30 to 35 parts by weight to the weight of the distilled product. The adsorption velocity and the concentration of adsorption equilibrium of zeolite is varied in the kinds of adsorbing impurities.

However, the adsorption velocity is variable to control surrounding's temperature. When the adsorption velocity is low, the immersing time has to be extended. And the concentration of adsorption is fixed by the surrounding's temperature and the type of zeolite, so it is essential to select the type of zeolite which is suited for the removing impurities.

The following all operation of examples and comparative examples are carried out in inert atmosphere.

### EXAMPLE 1:

### A. The synthesis of the Grignard Reagent

To 3ℓ volume of glass flask, as a reaction vessel, there were added 57.8g (2.4 mole) of magnesium and 1,200 ml of diethyl ether as a solvent, and then dropped 264 ml (2.4 mole) of tertiary-butyl-chloride. Then, supernatant liquid was transferred into the dropping vessel. 1,350 ml of black liquid was obtained. The measured titer was 1.42 mole/ℓ, and the yield of the synthesis was 80%. The obtained Grignard Reagent were correspond to 1.91 mole.

### B. The synthesis of the tertiary-butyl-phosphine-dichloride

To 5ℓ volume of glass flask, as a reaction vessel, there were added 261 g (1.91 mole) of phosphorus trichloride and 1,000 ml of diethyl ether, and then dropped the 1,350 ml of Grignard Reagent while the temperature of liquid was cooled less than -10 °C. After dropping, the temperature of reaction vessel was returned to room temperature. Then, the reaction mixture was filtered by the 285 mm diameter of 3G glass filter while the system was pressurized at +100 mm H₂O by nitrogen gas. In order to remove the organic solvent, the obtained filtrate was distiled at the vacuum pressure of 50 torr and the temperature of 30 °C. The implegment for distillation had equipped with fractional distillation and reflux apparatus. Then the temperature of flask was heated up to 65 °C, and the pressure of the distillation apparatus was vacuumized down to 10 torr, and finally 218 g of white solid were obtained.

The white solid which consisted of mainly tertiary-butyl-phosphine-dichloride was dissolved into 60 ml of diethylene glycol dimethyl ether (diglym). The yield of tertiary-butyl-phosphine-dichloride based on phosphorus-trichloride added was 72%. The purity of this solution was measured by Gas Chromatography Atomic Emission Detector (GC-AED).

### C. The synthesis of mono-tertiary-butyl-phosphine

To 2ℓ volume of glass flask, as a reaction vessel, there were added 31 g (0.81 mole) of Lithium Aluminum Hydride and 690 ml of diglym, and then made a suspension by agitation. The above mentioned 218 g (1.37 mole) of tertiary-butyl-phosphine-dichloride dissolved in 60 ml of diglym, were dropped into the vessel while maintaining at the temperature thereof below -10°C and stirring. Then 96 g of colorless transparent liquid was collected by vacuum distillation while maintaining the pressure thereof at 150 torr and the temperature thereof at 70°C. The principal component of the product thus obtained was confirmed to be the intended mono-tertiary-butyl-phosphine by GC-AED analysis, and this product had contained 9.7% of diglym. The yield of this mono-tertiary-butyl-phosphine based on the tertiary-butyl-phosphine-dichloride added was 78%.

### D. The purification of mono-tertiary-butyl-phosphine

The collected 96 g of mono-tertiary-butyl-phosphine which had contained 9.7% of diglym was distiled at normal pressure by the distillation apparatus which had equipped with vigreaux distilling column (30 cm long *1.5 cm diameter) while maintaining the temperature thereof at 60 °C, and 84 g of mono-tertiary-butyl-phosphine was recovered. This mono-tertiary-butyl-phosphine had contained 500 ppm of diethyl ether, 350 ppm of tertiary-butyl-chloride, 10 ppm of tertiary-butyl-alcohol and 70 ppm of diglym. The yield of this operation was 97%. Then, to this mono-tertiary-butyl-phosphine, there were immersed 25 g of 13x type molecular sieve (manufactured by UNION SHOWA K.K.) as a zeolite adsorbent. After seven days immersion, 72 g of purified mono-tertiary-butyl-phosphine were separated. The content of diethyl ether, tertiary-butyl-chloride, tertiary-butyl-alcohol and diglym therein were all less than 1 ppm. The yield of this operation was 86%.

### EXAMPLE 2:

The same procedures used in A, B and C of Example 1 were repeated, 95 g of mono-tertiary-butyl-phosphine which contained 8.9% of diglym was collected. Then the collected mono-tertiary-butyl-phosphine was distiled at normal pressure by the distillation apparatus of packed column type (100 cm x 2 cm ⌀) loading with RASCHIG-RING while maintaining the temperature thereof at 60 °C, and 60 g of mono-tertiary-butyl-phosphine were recovered. This mono-tertiary-butyl-phosphine contained 80 ppm of diethyl ether, 200 ppm of tertiary-butyl-chloride, 5 ppm of tertiary-butyl-alcohol and less than 1 ppm of diglym. The yield of this operation was 69%.

Then, to this mono-tertiary-butyl-phosphine, there were immersed 25 g of 13X type molecular sieve, as a zeolite adsorbent. After four days immersion, 52 g of purified mono-tertiary-butyl-phosphine were separated. The content of diethyl ether, tertiary-butyl-chloride, tertiary-butyl-alcohol and diglym therein were all less than 1ppm. The yield of this operation was 87%.

### COMPARATIVE EXAMPLE 1:

The same procedures used in A, B and C of Example 1 were repeated, 95 g of mono-tertiary-butyl-phosphine which contained 9.3% of diglym were collected. Then the collected mono-tertiary-butyl-phosphine was distiled twice at normal pressure by the distillation apparatus of packed column type (100 cm x 2 cm ⌀) loading with RASCHIG-RING while maintaining the temperature thereof at 60 °C, and 42 g of mono-tertiary-butyl-phosphine was recovered. This mono-tertiary-butyl-phosphine contained 30 ppm of diethyl ether, 150 ppm of tertiary-butyl-chloride, 5 ppm of tertiary-butyl-alcohol and less than 1 ppm of diglym. The yield of this operation was 49%.

### EXAMPLE 3:

### A. The synthesis of the Grignard Reagent

The same procedures used in Example 1 were repeated.

### B. The synthesis of tertiary butyl arsine dichloride

To 5ℓ volume of glass flask, as a reaction vessel, there were added 345 g (1.91 mole) of arsenic trichloride and 1,000 ml of diethyl ether and then dropped 1,350 ml of the Grignard Reagent (1.91 mole) while cooling the temperature of thevessel less than -25°C. After dropped, the temperature of the vessel was returned to room temperature, the reaction mixture was filtered by the 285 mm diameter of 3G glass filter while pressurizing at 100 mm H₂O by nitrogen gas. In order to remove the organic solvent, the obtained filtrate was distiled at the pressure of 50 torr and the flask temperature of 30 °C. The distillation apparatus had equipped with fractional distillation and reflax apparatus. Then the temperature of flask was heated up to 65°C, and the distillation apparatus was vacuumized down to 10 torr, and finally 271 g of white solid were obtained. The white solid which consisted of mainly tertiary-butyl-arsine-dichloride was dissolved into 64 ml of diglym, this solution was analysized the purity by GC-AED. The yield of this operation based on arsenic trichloride was 70%.

### C. The synthesis of mono-tertiary-butyl-arsine

To 5ℓ volume of glass flask, as a reaction vessel, there were added 31 g (0.81 mole) of Lithium Aluminum Hydride and 670 ml of diglym₇ and then made a suspension by stirring. The above mentioned 271 g (1.33 mole) of tertiary-butyl-arsine dichloride dissolved in 64ml of diglym, were dropped into the vessel maintained at the temperature thereof below -10°C while stirring. Then 157 g of colorless transparent liquid were recovered by vacuum distillation while maintaining the pressure thereof at 150 torr and the temperature thereof at 70 °C. The principal component of the product thus obtained was confirmed to be the intended mono-tertiary-butyl-arsine by GC-AED analysis. However this product had contained 7.3% of diglym. The yield of this mono-tertiary-butyl-arsine based on the tertiary-butyl-arsine-dichloride was 82%.

### D. The purification of mono-tertiary-butyl-arsine

The recovered 157 g of mono-tertiary-butyl-arsine which had contained 7.3% of diglym were distilled at the normal pressure by the distillation apparatus which had equipped with vigreaux distilling column (30 cm x 1.5 cm ⌀) while maintaining the temperature thereof at 72 °C, and 133 g of mono-tertiary-butyl-arsine were recovered. This mono-tertiary-butyl-arsine contained 300 ppm of diethyl ether, 260 ppm of tertiary-butyl-chloride, 12 ppm of tertiary-butyl-alcohol and 35 ppm of diglym. The yield of this operation was 91%. Then, to this mono-tertiary-butyl-arsine, there were immersed 45 g of 13X type molecular sieve. After seven days immersion, 116 g of purified mono-tertiary-butyl-arsine were separeted. The content of diethyl ether, tertiary-butyl-chloride, tertiary-butyl-alcohol and diglym therein were all less than 1 ppm. The yield of this operation was 87%.

### EXAMPLE 4:

The same procedures used in A,B and C of Example 3 were repeated, 150 g of mono-tertiary-butyl-arsine which contained 7.0% of diglym were recovered. Then the recovered mono-tertiary-butyl-arsine was distiled at normal pressure by the distillation apparatus of packed column type loading with RASCHIG-RING while maintaining the temperature thereof at 72°C, and 105 g of mono-tertiary-butyl-arsine were recovered. This mono-tertiary-butyl-arsine contained 20 ppm of diethyl ether, 35 ppm of tertiary-butyl-chloride, 6 ppm of tertiary-butyl-alcohol and less than 1ppm of diglym. The yield of this operation was 75%. To this mono-tertiary-butyl-arsine, there were immersed 35 g of 13X type molecular sieve. After two days immersion, 90 g of purified mono-tertiary-butyl-arsine were separated. The content of diethyl ether, tertiary-butyl-chloride, tertiary-butyl-alcohol and diglym therein were all less than 1 ppm. The yield of this operation was 86%.

### COMPARATIVE EXAMPLE 2:

The same procedures used in A, B and C of Example 3 were repeated, 151 g of mono-tertiary-butyl-arsine which contained 7.2% of diglym were recovered. Then, the recovered mono-tertiary-butyl-arsine was distiled twice at normal pressure by the distillation apparatus of packed column type (100 cm x ⌀ 2 cm) loading with RASCHIG-RING while maintaining the temperature thereof at 72 °C, and 69 g of mono-tertiary-butyl-arsine were recovered. This mono-tertiary-butyl-arsine contained 5 ppm of diethyl ether, 9 ppm of tertiary-butyl-chloride, 3 ppm of tertiary-butyl-alcohol and less than 1 ppm of diglym. The yield of this operation was 49%.

On depended upon the results above mentioned, the method which has just immersed the zeolite adsorbent after the mono-tertiary-butyl-arsine or mono-tertiary-butyl-phosphine had distilled only once, allows the production of the highly pure product, in a high yield.

As has been explained above in detail, the purification method of mono-alkyl-metal-organic compounds according to the present invention allows the production of the intended highly pure compound, whose grade is not able to reach by means of repetition of distillation, depended on the simple method which has just immersed the zeolite adsorbent with partly curtailment of complicated distillation process.

## Claims

1. A method for purifying metal organic compounds comprising the steps of
a. reacting this Grignard Reagent and arsenic-trihalide or phosphorus-trihalide in an organic solvent to synthesize mono-alkyl-arsine dihalide or mono-alkyl-phosphine-dihalide, then a magnesium halide as by-product is removed,
b. reacting this mono-alkyl-arsine-dihalide or mono-alkyl-phosphine-dihalide and reductant which is dispersed in an organic solvent to synthesize mono-alkyl-arsine or mono-alkyl-phosphine,
c. removing impurities which have high boiling point by distillation to purify this mono-alkyl-arsine or mono-alkyl-phosphine, then immersing a zeolite adsorbent in this mono-alkyl-arsine or mono-alkyl-phosphine to remove all other impurities,
d. recovering mono-alkyl-arsine or mono-alkyl-phosphine.

2. The method of claim 1 wherein said mono-alkyl-arsine or mono-alkyl-phosphine is mono-tertiary-butyl-arsine or mono-tertiary-butyl-phosphine.

3. The method of claim 1 or 2 wherein said zeolite adsorbent is 4A, 5A, 10x and/or 13X type.
